# EUROPEAN PATENT APPLICATION

(11) **EP 4 332 495 A1**
(43) Date of publication of application: **06.03.2024**
(21) Application number: 22193540.6
(22) Date of filing: 01.09.2022
(51) Int. Cl.: G01B 11/00, G01B 11/25, G01B 11/02, G01S 17/08, G01S 7/481

(54) **MEASURING INSTRUMENT WITH A SCANNING ABSOLUTE DISTANCE METER**

(71) Applicant: Leica Geosystems AG, 9435 Heerbrugg (CH)
(72) Inventor: LÜTHI, Thomas, CH-5000 Aarau (CH); REDGEWELL, Duncan, CH-5015 Niedererlinsbach (CH)
(74) Representative: Kaminski Harmann

(57) **Abstract**

The invention pertains to a measuring instrument for coordinative measuring of object surface points of an object embodied as a measuring head of a coordinate measuring machine (CMM) or of an articulated arm or embodied as a handheld measuring probe of a measuring system having a surveying station such as a laser tracker or as a 6-DoF handheld measuring instrument with an IMU. The measuring instrument comprises a scanning absolute distance meter with a light source, a transmission channel for emitting light from the light source as a measurement beam along a targeting axis towards the object, a beam deflection unit for scanning deflection of the targeting axis, a receiver channel for receiving at least part of the measurement beam reflected from the object surface, an opto-electronic detector for detection of the received measurement beam and outputting an according detection signal and an evaluation unit for determination of a coordinate of a surface point based on the actual targeting axis and on an absolute distance derived from the detector's detection signal.

## Description

The present invention pertains to a measuring instrument embodied as a measuring head of a coordinate measuring machine or of an articulated arm or embodied as a handheld measuring probe of a measuring system having a surveying station for measuring of coordinates of object surfaces.

The need exists in many technical areas of application to measure objects with high accuracy or with respect to their composition. This applies in particular to the manufacturing industry, for which measuring and checking surfaces of workpieces is highly important, in particular also for the purposes of quality control. Objects to be measured can be engine blocks, transmissions, and tools, for example. Coordinate surface measurement permits geometric deviations on the workpiece from corresponding target values to be established. In this regard, a high-accuracy specification can thus be made for the manufacturing precision or manufacturing quality. It can thus be established whether shape and dimensioning of the produced part are within a predetermined tolerance and the component is to be considered a discard or good part.

There are principally two classes of measuring heads/sensor types that are used when measuring objects: the measuring heads effecting tactile scanning and the measuring heads effecting non-contact scanning. Tactile measuring heads comprise for example a measuring stylus with a ruby sphere fixed at one end. The ruby sphere is brought into contact with a point to be measured of an object surface and the 3D coordinates of this point are ascertained on the basis of this. Measuring heads effecting non-contact measuring comprise stereo cameras. Other non-contact options are scanning means with a beam source for emitting measurement radiation. The radiation can be for example in form of a line or area or point-like wherein a point to be measured of an object surface is irradiated by the measurement radiation and measurement radiation is reflected from this irradiated point and the 3D coordinates of this point are ascertained on the basis of this. For example, a laser line probe emits a laser light either on a spot or along a line. An imaging device, such as a charge-coupled device (CCD) for example, is positioned adjacent the laser to capture an image of the reflected light from the surface. The surface of the object being measured causes a diffuse reflection. The image on the sensor will change as the distance between the sensor and the surface changes. By knowing the relationship between the imaging sensor and the laser and the position of the laser image on the sensor, triangulation methods can be used to measure points on the surface.

Coordinate measuring machines (CMMs), for example gantry measuring machines, which enable a precise measurement of the geometry of an object surface, typically at least at micrometer accuracy, are used for such applications. All of these machines have a measurement arm which can be positioned in three directions in space, and the end of the measurement arm carries a probe or measuring head with a probe which mechanically contacts the object or workpiece to be measured. Examples of such coordinate measuring machines are described, for example, in DE 43 25 337, DE 39 41 144, DE 43 17 410 or DE 43 25 347.

In a conventional 3-D coordinate measurement machine, a measuring head with a sensor is supported for movement along three mutually perpendicular axes (in directions X, Y and Z).

Thereby, the measurement head can be guided to any arbitrary point in space of a measuring volume of the coordinate measuring machine and the object is measurable with a carried measurement sensor arrangement (sensor chain).

In a simple form of the machine a suitable transducer mounted parallel to each axis is able to determine the position of the measurement head relative to a base of the machine and, therefore, to determine the coordinates of a measurement point on the object being approached by the sensor. For providing movability of the probe head, a typical coordinate measuring machine may comprise a frame structure on which the measurement head is arranged and driving means for moving frame components of the frame structure relative to each other.

Another system is based on the use of an articulated arm, the measuring sensor of which, which is arranged at the end of the multipart arm, can be moved along the surface. Generic articulated arms are described, for example, in US 5,402,582 or EP 1 474 650. Those devices comprise a base to be stationed and an arm comprising multiple arm segments connected by articulations. The articulations provide movability to a movable end of the arm, which is opposed to the base, and at the movable end there is a probe head. Each of the articulations of the arm is equipped with a sensor to determine a positional information of the articulation, so that the pose of the arm can be determined thereof and position and orientation of the probe head with respect to the base can be determined. The probe head is equipped with at least one, preferably exchangeable, measurement sensor which can be used to measure a point or an area of the object to be examined. Typically, a user of an articulated arm simply guides a measurement head along the surface of the part or object to be measured. The measurement data are then recorded and provided to the user. In some cases, the data are provided to the user in visual form, for example, three-dimensional (3-D) form on a computer screen.

Another industrial measuring system for determination of coordinate positions of points on a surface can be formed by a handheld measuring aid in cooperation with a referencing station, generally a (6-DoF) laser tracker, surveying the measuring aid in space, the measuring instrument either also measuring by contact or contactlessly (optical scanning). Such measuring systems are described, for example, in DE 10 2004 026 090 A1, WO 2011/000435 A1 or EP 0 553 266 or such a measuring instrument is also known in the form of the "T-Scan" product sold by Leica Geosystems AG.

For cooperation of a handheld measuring probe with the surveying station such as a laser tracker, visual markings can be present on the measuring instrument which are disposed, forming a pattern, on its body in a defined spatial relationship to one another and in relation to a point of origin of an internal coordinate frame of the measuring probe in a marking region. In particular, these visual markings may be provided by passive or active light spots able to be captured by a camera, wherein the markings are in particular formed by reflectors or by LEDs.

The measuring stations (such as laser trackers in particular) to be used together with the measuring aid may then be embodied to capture these markings, with an optical image capturing unit having a two-dimensional, light-sensitive array, e.g., a CCD or CID camera or a camera based on a CMOS array (or having another pixel array sensor), and with an image processing unit. In particular, the camera may then be installed on the station such that the positions thereof in relation to one another are not variable. For example, the camera is installed on the station such that it is pivotable by a motor about one or about two axes, and can thus track the measuring aid also during movement so that it remains within the camera's field of vision.

A target point, which is targetable and trackable, for such a laser tracker can be formed by a retroreflective unit of the measuring instrument (e.g., a cubic prism or corner cube retroreflector), which is targeted using an optical laser measuring beam of the measuring device. The laser beam is reflected by the retroreflector in parallel back to the measuring device, the reflected beam being captured using a capturing unit of the device. Here, an emission or reception direction of the beam is identified, for example, by means of sensors for angle measurement which are associated with a deflection mirror or a targeting unit of the system. In addition, with the capturing of the beam, a distance from the measuring device to the retroreflector is identified, e.g., by interferometry or by means of runtime and/or phase difference measurement.

For this purpose, laser trackers generally have a tracking surface sensor in the form of a position-sensitive surface detector (such as a PSD or a CCD or CMOS sensor), wherein measuring laser radiation reflected on the target can be detected thereon and a corresponding output signal can be generated. By means of this tracking and a fine targeting sensor, a divergence of the point of incidence (focal point) of the captured beam from a servo-control zero point can thus be determined and, on the basis of the divergence, precise targeting or - in the event of movement of the handheld measuring instrument - repositioning of the laser beam towards the retroreflector can be performed. After precise targeting, angle and distance measurement is performed - as described above - for the actual surveying of the retroreflector.

The other three degrees of freedom of the measuring aid are determined by recording an image of the markings and corresponding image processing. In particular, the unit guiding the laser beam and the camera can then be formed such that their positions in relation to one another are not variable. By capturing and analyzing the image - by means of image capturing and processing units - of the visual markings, the relative location of which to one another is known, the orientation of the measuring aid instrument in space may thus be concluded. Together with the determined spatial position of the retroreflector, the position and orientation of the measuring aid in space can therefore be precisely determined (6-DoF determination) and therefore ultimately the surface point which is "contacted" in a optical manner by the measuring instrument.

As an alternative to the use of a laser tracker as a surveying station for the measuring aid, the station may also be designed such that six-degrees-of-freedom surveying of the measuring aid can also be performed in a solely camera-based manner, as for instance is described in the patent literature publications WO 2007/124009 A2 or WO 2007/124010 A2.

A measuring instrument for contactless measuring of object surfaces for the purpose of manufacturing control typically works by said triangulation method. As a measuring method, triangulation enables, in general, the rapid and precise scanning of a surface. Triangulation scanners offer the advantage of a contactless surface measurement with comparatively high measurement accuracy and rapid measurement progress at the same time.

One type of triangulation-based, non-contact device is a laser line probe (LLP), which includes a projector and a camera. The projector includes a light source that emits a light, typically as a line. Thus, the LLP is also known as a line scanner. The emitted light may be laser light, partially coherent light, or incoherent light. The camera includes a camera-type imaging device, such as a charge-coupled device (CCD) or CMOS photosensitive array. The camera captures the pattern of light on the object surface, which is processed to determine 3D coordinates of an object surface.

A measuring system based on the principle of strip projection represents a special form of a measurement instrument having a triangulation scanner. Such a measuring device typically has a projector and two cameras, which enable a respective acquisition of a pattern projected by means of the projector at different angles. Such an instrument is also known as an area scanner or structured-light scanner. In such a scanner, the projector projects onto a surface a two-dimensional pattern that is captured by the camera and processed to determine 3D coordinates. Such systems are known, for example, from EP 3 258 211 A1 or US 2014/0078490 A1.

A problem with carrying out a measurement with a measuring system with a camera or scanner often arises with manual, i.e. hand-held, measurements. Because in principle very high computing powers are necessary in order to record and to process a scatter plot of a surface in three-dimensions, in particular if recorded images or scan lines are to be merged because of a movement of the measuring system, the movement tolerance is usually significantly limited in relation to speed and vibration. A substantial steadiness of the measuring system when measuring is thereby mandatory and if not maintained is a major cause of generated measurement errors.

In general, contactless measuring instruments typically have a defined measurement volume, within which a surface measurement is reliably possible. In other words, the distance between the measuring instrument and the surface has to correspond to a specific measurement distance from a permissible distance range. The measurement volume is delimited laterally in relation to the distance by the lateral measuring range (measurement field). In such devices, the measurement distance has to be maintained accordingly in each case, for example, for different objects or objects having complex surface geometry and the lateral measuring range is thus given.

Measuring instruments are also known which can provide different measuring ranges. However a triangulation scanner which covers a wide measuring range with one design is not feasible as for different ranges the relative position of the laser projector and the camera has to be adapted as well as the focus of the camera or projector. Hence to provide different measuring range, the objectives of both the camera and also the projector have to be changed. This exchange is to be carried out manually by a user. A recalibration of the cameras in relation to one another has to take place accompanying this. This sequence results in a measurement interruption and thus a disadvantageous lengthening of the total measuring time and moreover only has limited suitability for automated use.

It is an object of the present invention to provide an improved measuring instrument for contactless scanning coordinative measuring of object surfaces.

It is another object to provide such a measuring instrument with enlarged measurement volume.

At least one of these objects is achieved by the measuring instrument according to the independent claim and/or the dependent claims of the present invention.

The invention pertains to measuring instruments for coordinative measuring of object surface points of a natural/non-cooperative/diffusely scattering object, the measuring instrument being embodied as a measuring head of a coordinate measuring machine, of an unmanned ground or aerial vehicle or of an articulated arm or embodied as a handheld measuring probe of a measuring system having a surveying station such as a laser tracker or embodied as a 6-DoF-handheld measuring instrument with an inertial measuring unit (IMU) and optionally with SLAM-based (Simultaneous Localization and Mapping) position determination function. The measuring instrument comprises a scanning absolute distance meter with a light source and a transmission channel for emitting light from the light source as a measurement beam along a targeting axis towards the object whereby for example conventional optics with lenses, optical fibers and/or a phased array can be applied and/or the measurement beam is a free beam. The measuring head or handheld measuring probe further comprises a scanning unit providing a scanning steering of the targeting axis, e.g. a beam deflection unit or means for direct fast change of the emission direction of the light source. The instrument further comprises a receiver channel for receiving at least part of the measurement beam reflected from the object surface, an opto-electronic detector for detection of the received measurement beam and outputting an according detection signal and an evaluation unit for determination of a coordinate of a surface point based on the actual targeting axis and on an absolute distance from the instrument/detector to the surface point derived from the detector's detection signal.

Optionally, the beam deflection unit comprises position measuring means for measuring of the actual targeting axis, e.g. by directly measuring the direction of the emitted light or using a position encoder, e.g. an angle encoder, for measuring a (rotational) position of the deflection unit, e.g. using a deflection unit's shaft or drive position. As another option, the beam deflection unit is designed for variable scanning deflection of the targeting axis, in particular according to a 1D or line-scanning mode and a 2D-scanning mode. Hence, the instrument enables scanning with different measurement modes or scan patterns.

In some embodiments, the beam deflection unit comprises a polygonal wheel, a rotating mirror, a MEMS-mirror, a galvo-mirror, a Risley-prism, liquid lens, liquid-filled variable wedge, a solid-state beam deflection system such as an acousto-optic modulator, electro-optic modulator, KTN crystal (potassium tantalate niobate crystal) or phased array. As a further option and in case of a MEMS-mirror, the MEMS-mirror is designed for beam deflection by oscillation with its resonance frequency.

Optionally, the transmission channel comprises a focusing optics for focusing the measurement beam on the object surface. Therewith, an adaptive or tracking focusing is enabled, for example instantaneously adapting to a change in object distance.

Optionally, the absolute distance meter is designed for determining a distance based on the principle of time-of-flight, frequency comb principle, frequency modulated continuous wave principle, Fizeau principle and/or phase difference measurement principle. As another option, the measuring instrument is designed for point measurement rates of more than 100k points/sec.

In particular in case of a handheld measuring instrument, the measuring instrument optionally comprises a targeting axis or beam alignment stabilization, e.g. for hand shake compensation.

In some embodiments, the evaluation unit is designed to determine an intensity value of the detected measurement beam and/or the measuring instrument comprises a feedback loop for control of the intensity of the emitted measurement beam based on the detection signal. Therewith, for example an automatic adaption to a change in surface reflectivity is provided.

Optionally, the measuring beam has a wavelength in the visible range or the measuring instrument comprises means for emitting an indicator light, for example as an indicator beam coaxially to the measurement beam or in form of an areal/spread projection. For example in case of a laser light source or a SLED as light source, the measuring instrument comprises means for speckle reduction, in particular an optical element situated in the transmission channel or speckle mitigation on the detection side.

In some embodiments, the evaluation unit is designed to generate a colorized point cloud based on the determined coordinates and on beam intensity values and/or to derive a property of the measured surface from an intensity value of the received measurement beam.

As another option, the measuring instrument comprises a sensor for determination of a position and/or orientation of the measuring instrument, in particular an Inertial Measurement Unit.

As still another option, the measuring instrument comprises a camera for imaging at least part of the object surface. Optionally, the camera is arranged in a defined and known spatial relationship to a reference point of the absolute distance meter and/or to the targeting axis, in particular is an on-axis camera.

Optionally, the beam deflection unit is controllable in such a way that the targeting axis is automatically aligneable to a feature of the object surface detected by image evaluation/feature recognition of an image captured with the camera.

In some embodiments, the measuring instrument comprises a sensor for measuring a temperature of the object surface, in particular an infrared sensor.

In some embodiments, the evaluation unit is designed to determine a thermal emissivity of the object surface based on a camera image and/or on a measured intensity value of the reflected measurement beam.

The present invention advantageously provides a measuring instrument respectively a measuring system such as a coordinate measuring machine, an unmanned ground or aerial vehicle or an articulated arm or a system with a surveying station with such a measuring instrument wherein instead of a triangulation scanner the measuring instrument has a scanning absolute distanced meter. With the inventive scanning measuring aid or head, a wide range of object distances can be covered (in principle the complete available distance measuring range of the absolute distance meter). Thus, one instrument is sufficient ("one size fits all") instead of multiple triangulation instruments each only covering a limited measuring range. Besides cost efficiency, this can simplify a measurement procedure as no change of the apparatus or at least parts of it is necessary in between.

As another advantageous difference to a triangulation instrument, a coaxial measurement is enabled. Hence, for instance narrow bore holes or the like are accessible which is not possible with triangulation. Further, at least for long range measurements the accuracy can be improved which is limited for triangulation instruments due to the limited space between projector and camera (limited base line).

As still another advantage, due to a wide range of possible beam deflection such a scanning absolute distance meter provides better flexibility than a triangulation scanner regarding point density and/or scan line width.

The invention in the following will be described in detail by referring to exemplary embodiments that are accompanied by figures, in which:
- Fig. 1: shows a first exemplary embodiment of a scanning surveying system comprising a measuring instrument;
- Fig. 2: shows a scanning absolute distance meter of a measuring instrument in a purely schematic depiction;
- Fig. 3: shows another exemplary measuring instrument with a scanning absolute distance meter;
- Fig. 4: shows still another exemplary measuring instrument with a scanning absolute distance meter;
- Fig. 5: illustrates an example of a scanning measurement system embodied as an Articulated Arm Coordinate Measurement Machine with a scanning head as a measuring instrument; and
- Fig. 6: shows the measuring instrument having a camera 29 and a display.

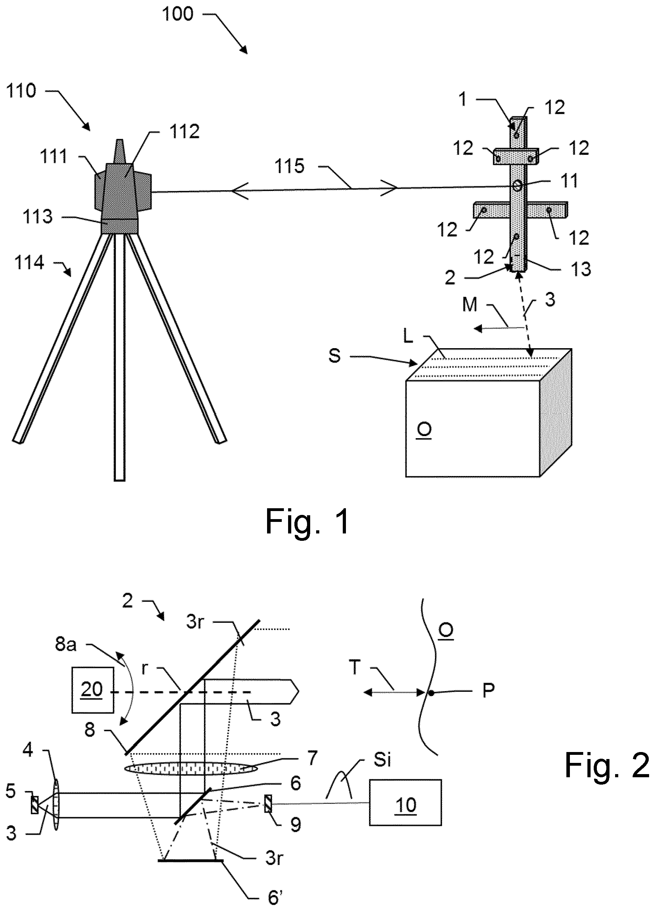

Figure 1 shows an exemplary embodiment of a system 100 comprising a measuring instrument 1 according to the invention for surveying a surface of an object O. The system comprises a laser tracker 110 as a fixed ground-based surveying station, however, there are also mobile laser trackers known in the art. The laser tracker 110 comprises a basis 113, a support 112 attached thereto and a beam-guiding unit 111 supported on two struts (not shown herein) of support 112. The shown laser tracker 110 is disposed on a tripod 114 and - using a laser beam 115- measures the distance to a retroreflector 11 located on a measuring aid or measuring instrument 1. Measuring aid instrument 1 further comprises a number of target markings 12, for example in the form of reflective or self-luminous light spots attached to the body 13 of measuring aid 1. This means, measuring aid 1 has a body 13 on which visual markings 12 are disposed in a marking region in a defined spatial relationship to each other, forming a pattern.

To measure multiple object points e.g. in form of a scanning line L, the instrument 1 comprises a scanning absolute distance meter 2. The scanning absolute distance meter 2 emits a measurement beam 3 and receives the reflected beam coaxially whereby a scanning movement of its targeting direction i.e. a fast steering in at least one direction, e.g. combined with a slower steering in a second direction, is effected (indicated by arrow M) allowing to survey the line L of target surface points of the target object O. With the absolute distance meter 2, distance to an object can directly be measured (rather than a distance change in case of an incremental measurement) over a wide measurement range and without requiring a known initial position.

Scanning can be implemented in form of a straight line deflection which can be aligned, a horizontal straight line deflection or a vertical straight line deflection. Or a more complex scan pattern S is formed e.g. in form of a cross-shaped straight line deflection, a circular or ellipsoidal line deflection, a parallel surface deflection, a zigzag surface deflection, a sinusoidal surface deflection, a rosette scanning or a Lissajous surface deflection provided in this case by the device. Thereby, measurement points can be scanned with a point distance below the full width half maximum of the measurement beam 3, e.g. for applying superresolution evaluation algorithms. In any case, as a measurement result, the plurality of absolute distance measurement points are stored and provided for further processing in this case.

The absolute distance meter 2 can be an integral part of measuring aid 1 or can be attached to the measuring aid 1 in a modular or replaceable manner, so that various (measuring, inspection or processing) tools can be connected to the measuring aid 1, e.g. various scanning heads in which case a connection for receiving a measuring tool can have a mechanical and electrical connecting elements which enable, for example, automatic detection of the respective measuring tool.

To detect and track movements of the measuring instrument 1 such that laser beam 115 stays aligned towards retroreflector 11, laser tracker 110 has a target acquisition unit. The target acquisition unit is preferably disposed in beam-guiding unit 111 and enables realigning the emitted laser beam 115 by capturing the orientation of laser beam 115 reflected by a target, in particular retroreflector 11. By realigning the laser beam, continuous tracking of measuring aid instrument 1 may be performed and the distance and position of the target point can be continuously determined relative to laser tracker 110.

In the arrangement shown, measuring laser beam 115 is aligned towards retroreflector 11 and is retroreflected thereon back to laser tracker 110. By means of this measuring laser beam 115, a distance to reflector 11 can be determined. For this purpose, laser tracker 110 has a distance measuring unit (e.g., with an interferometer and absolute distance meter) and goniometers, which make it possible to determine a position of targeting unit 111, by means of which laser beam 115 can be aligned and guided in a defined manner, and therefore a propagation direction of laser beam 115.

Moreover, laser tracker 110 preferably has an image capturing unit. For the purpose of determining the position of a sensor exposure on a sensor or in a captured image, this image capturing unit may have a CMOS or is implemented in particular as a CCD camera or pixel sensor array camera. Such sensors allow position-sensitive detection of acquired light on the detector. In the example, by scanning the line of object points L, a position of a respective object point and therefore the coordinates of a scanned object point on the measured object surface can be exactly determined.

This determination is performed by means of knowledge of the actual targeting axis or emission direction of the measurement beam 3 of distance meter 2 while measuring a distance to the respective point by the absolute distance meter 2. The spatial relation of the distance meter 2 resp. of its internal frame of reference towards reflector 11 and towards reference features 12 disposed on measuring aid 1 is well defined. Hence, with determined spatial relation of the measuring instrument 1 towards the external frame of reference given by laser station 1 using the retroreflector measurement and the reference spots 12, the coordinates of the object points L can be finally determined in the external frame of reference.

An orientation of instrument 1 can be determined from the location or distribution of the light spots 12, which can be implemented as light-emitting diodes (LEDs), for example, generated by reference features 12 in an image captured using a sensor of the image capturing unit. The captured image of measuring aid 1 or the provided light spots are therefore used as the basis for determining the orientation of the instrument 1. For, in particular focused, capturing of LEDs 12 using an optimum and known image scale, laser tracker 100 may have vario-zoom optics, i.e., two optical assemblies (e.g., lenses) positionable independently of one another in relation to the image capturing sensor.

For this final orientation determination, laser tracker 100 also has a special image recording and analysis functionality, which is executable by a control and processing unit of tracker 110. In the scope of this embodiment, an image of reference features 12 of measuring aid 1 is captured and the orientation or alignment of measuring aid 1 is derived based on image positions for the light spots captured in the image by means of image processing. Here, the camera is aligned such that an image may be captured in the direction of measuring aid 1 targeted by means of laser beam 115.

Alternative methods or devices may also be used to determine the location or orientation of a measuring aid 1, such as those determining a location or orientation by means of tilt sensors of measuring aid 1 and/or an Inertial Measurement Unit (IMU) which measures the accelerations, angular rates and optionally the magnetic field whereby for example state estimation algorithms can be applied. Alternatively or additionally, the user device 1 comprises single angular sensors and/or inclination sensors or accelerometers (e.g. a 3-axis MEMS accelerometer) and/or a magnetometer and/or a gyroscope or means for determination of an inclination angle of the incoming laser beam 115 (laser beam direction of incidence determination unit) for determination of the rotational position of device 1. Due to such position and orientation giving means, the actual position of the device 1 with respect to all six degrees of freedom (all rotational and translational DoF) of the device 1 can be determined.

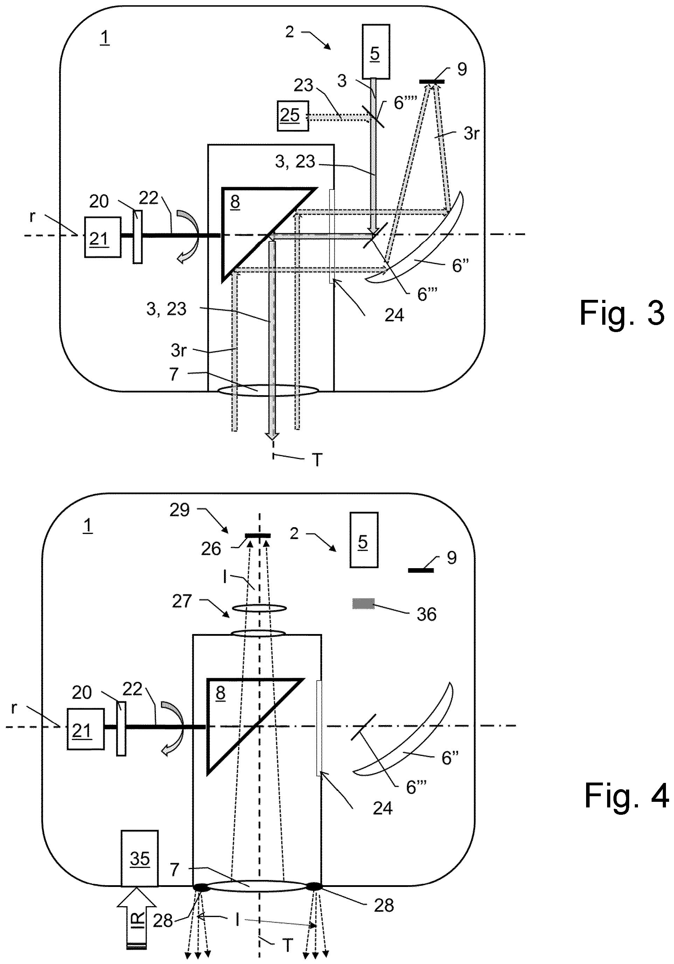

Figure 2 shows a scanning absolute distance meter 2 of a measuring instrument in a purely schematic depiction. A light source 5 emits a laser beam 3 as the measurement radiation, either as continuous wave or in form of a stream of light pulses. The light source 5 is for example a laser diode, a superluminescent light diode (SLED), a laser-diode or SLED seeded fiberamplifier, a VCSEL or a fiber laser. The generated light can be modulated, e.g. by means of pulse modulation, interval modulation, amplitude modulation, frequency modulation, burst modulation, polarization modulation or wavelength modulation. The light source 5 emits light of a wavelength in the visible range (380-780nm) or in the IR-range (e.g. 1200nm to 1800nm, in particular 1310nm or 1550nm) . Shorter wavelengths provide a better lateral resolution and lower surface penetration while an IR-wavelength provides advantages with regard to eye safety. In case of an invisible measurement beam 3, an additional visible indicator beam generated by an additional light source or out of a portion of the light of measurement light source 5 by an optical frequency converter and emitted coaxially to the measurement beam 3 can be applied for visually indicating the targeting axis T (cf. also Fig. 3).

The laser beam 3 which is in the example pre-focused by a collimating lens 4, which can optionally be rotatable, shiftable and/or pivotable, as a first optical means of the transmission channel and is incident slightly widened on a deflection mirror 6 as a further optical means. The laser beam 3 is reflected therefrom in the direction of the main objective lens 7 and is guided onto a second deflection element 8, which provides a variation of the emission direction of beam 3 resp. a variation of the targeting axis T (indicated by arrow 8a).

The second deflection element 8 is for instance a rotating, oscillating or sweeping mirror, which is for example in case of a rotating mirror rotatable about at least one rotation axis r, and the actual rotation angle can be detected using an angle measurement sensor 20 and therewith the targeting axis T in which the beam 3 is emitted at the target object. Instead of using a position encoder A, the deflection unit 8 can be designed in one embodiment in such a way that it provides a value of its present deflection resp. of the targeting axis T by way of its activation. As another possibilities, an additional light beam originating or reflected from the back side of the deflection element 8 is sensed by a position sensitive detector or a part of the measurement beam 3 is coupled out and its direction is determined.

In any case, by at least one movable deflection element such as sweeping mirror 8, a fast deflection of the measurement beam 3 in one or two dimensions is enabled, allowing for a scanning of the object surface by the scanning absolute distance meter 2. In preferred embodiments, both a 1D- (line) and 2D-scanning (areal) mode is enabled, for example with different scan patterns. Alternatively to a continuous deflection, a deflection can in principle also take place in discrete steps.

Different embodiments can in principle be used for the principle of the invention with respect to the deflection unit 8, which is illustrated symbolically here in the form of a rotating mirror, for example a rotating polygon wheel or another multifaceted component in reflection or transmission, a rotating mirror, a rotating mirror on an axis having tilt, such as, for example, a nutating mirror, Palmer scanner, etc., a liquid lens, an oscillating mirror having one or two axes of rotation or having a single-axis or dual-axis flexure or gimbal, a micro scanning mirror, a MEMS mirror, a galvo mirror, an array of movable (micro or nano) mirrors, a rotating double-wedge system or a Risley-prism, a movable optical waveguide, an electro-optical modulator, a KTN-crystal, a phased array or an acousto-optical modulator.

An embodiment having a deflection unit 8 having an MEMS mirror represents a preferred embodiment because of short reaction time, its structural small size and relatively simple activation capability which is particularly advantageous for a handheld device. In an embodiment with a resonant scanner, the measurement path can be formed in this case as a straight line, along which the light beam oscillates and along which a plurality of distance measurement points are defined. The resonant frequency is for instance 100 Hz or above and defines the number of scan lines per second whereby the frequency is constant but the extend of deflection (length of scan line) is variable. Also as said, a galvo-actuator can be implemented for exiting the rotating member 8 in an oscillating state at e.g. 300 Hz at low power dissipation.

After the reflection of the measurement light on the target object, the received beam 3r is guided along the receiver channel by the rotatable beam deflector 8 through the main objective lens 7 onto a further optical means, a mirror 6'. As the round trip time is neglectable compared to the rotational speed of mirror 8 (for the intended measurement ranges), the measurement is isotropic or coaxial as there is substantially no angle deviation between outgoing beam 3 and incoming beam 3r, the receiving channel and the transmission channel are optically coaxial to one another (the receiver looks at the point P where the emitted beam 3 hits the surface of object O according to the emission direction/targeting axis T). The beam 3r is reflected from mirror 6' onto the (back side of) deflection mirror 6 and guided from there further onto the opto-electronic sensor 9. The mirror 6' folds the optical system so that the optical system occupies the smallest possible volume.

A detection signal Si outputted by sensor 9 in response to the received measurement light 3r is fed into an evaluation unit 10 together with the measured rotational position of mirror 8 (targeting axis position or emission direction value) which determines from this data a coordinate value of object P. For example, a distance to the point P is determined from detection signal Si based on the principle of time-of-flight. The lateral position of the measurement point P is given by the emission direction of beam 3. With a pulsed TOF-distance meter, for example a laser emits a pulse of light, whereby part of the light is sent to the object, scatters off the object surface, and is picked up by an optical detector that converts the optical signal into an electrical signal. Another part of the light is sent directly to the detector (or a separate detector), where it is converted into an electrical signal. The time delay between the leading edge of the two electrical pulse signals is used to determine the distance to from the distance meter to the object point.

Other applicable measurement principles known for absolute distance measurement are for instance based on frequency combs, frequency modulated continuous wave (FMCW), Fizeau principle, phase difference measurement, white-light interferometry or multi-wavelength interferometry. For instance a phase based absolute distance meter is one in which a modulation is directly applied to a laser to modulate the optical power of the emitted laser beam. The phase associated with the fundamental frequency of the detected waveform is extracted. Typically, the phase associated with the fundamental frequency is obtained by sending the light to an optical detector to obtain an electrical signal, condition the light (which might include sending the light through amplifiers, mixer, and filters), converting the electrical signals into digitized samples using an analog-to-digital converter, and then calculating the phase using a computational method.

Any applicable method is chosen mainly with regard to short measurement times, enabling high measurement rates of at least 100 kpoints/sec and providing further benefits in form of low blur and particular in case of handheld measurement instruments reducing the disturbance of hand shaking. For precise absolute distance measurement, e.g. with sub-mm accuracy, an internal light path can be used for generating reference signals which define precise trigger signals associated with the emission time of the optical radiation emitted to the target object O.

The measured distance value is optionally used for automatic focusing the measurement beam 3 on a surface point P, e.g. by lens 7 or any additional autofocus optics. Hence, an optimal focus is automatically provided, e.g. by a "live"-adaption even in case of different or varying measurement distances. Additionally or alternatively, the scan pattern can be adjusted so that focus speed is minimized (e.g. such that very fast distance changes are avoided or areas out of focus are automatically rescanned with the correct focus).

As another feedback-option, the detection signal Si is evaluated with respect to a detected intensity/amplitude and the intensity of the measurement beam 3 is controlled based thereon. Therewith, an amplitude of the received beam 3r in an optimal detection/working range of the sensor 9 can be controlled, e.g. as an adaption to different surface reflectivities. A detected intensity value can also be used to determine a property of the measured surface such as its reflectivity. Also, intensity values of measured points P can be used to colorize a point cloud generated out of the measured coordinates as in principle known in the art of point cloud generation.

In particular in case of a handheld instrument 1, the instrument 1 can comprise stabilization means resp. a stabilization mode for stabilization of the beam alignment using for example deflection element 8 or an additional optical element in order to compensate involuntary (unintentional) shifts of the housing, e.g. a shaking or jitter of the device 1, for example due to trembling of the user's hand holding the device 1 (tremor compensation) or due to a shaky carrier. As another option, the device 1 comprises an active gimbal or other stabilization mechanism for beam stabilization, wherein for instance the gimbal is carrying or encasing at least the radiation source 5.

Figure 3 shows another exemplary measuring instrument 1 with a scanning absolute distance meter 2. Measurement beam 3 is generated by a radiation or light source 5, situated in the housing of the handheld measuring probe 1 or measuring head 1. Regarding lasersafety limits, maximum optical power with lowest hazard level is when using light sources in the wavelength range of 1200nm to 1800nm. The beam 3 is first passing the semi-transparent element 6ʺʺ and directed onto a mirror 6‴ (grey arrow). Said mirror 6‴ turns the beam 3 around such that it passes through a window or opening 24. Beam 3 then hits the beam deflection element 8 which is rotatable about deflection axis r. Thus, reflected from the beam deflection element 8 as shown, the beam 3 is emitted as shown through aperture 7. In front of or in between beam deflection element 8 and its exit point, additional optics can be placed (not shown) such as beam forming lenses, focusing lens, magnifying lenses or beam expander optics.

The posture of beam deflection element 8 and thus the emission direction T of beam 3 is variable as element 8 can be rotated about deflection axis r. For example, the targeting direction T of beam 3 can be changed due to deflection element 8 such that the whole opening angle of aperture 7 can be used. For example, a maximum angle of rotation of emission direction resp. deflection element 8 is e.g. 150° in one or both directions from the zero position. Beam 3 can then be emitted for instance through one or more additional wide angle apertures.

Rotational posture of beam deflection element 8 is changed by drive 21 situated in one side of the housing as shown. Beam deflection element 8 is connected to drive 21 by a shaft 22 and its rotational position is determined by deflection angle encoder 20. The deflection drive 21 is a fast drive, e.g. allowing for a rotational speed of several hundred or thousand rotations per minute for instance.

Measurement radiation 3r returning from the target or object to be measured (returning beam 3r indicated by dashed grey arrows) is back reflected by deflection element 8. A static parabolic mirror 6'' then directs and focusses the returning measurement light 3r onto optical sensor 9, where the light 3r is detected for determining a distance to an object point, e.g. based on Time of Flight or any other principle for opto-electronical distance measurement, for example using real-time wave form digitizer (WFD).

In addition, in the example light 23 of a pointer beam source 25 is emitted by deflection by semi-transparent mirror 6ʺʺ along the optical path of the measurement beam 3. Thus, a pointing laser beam 23 can be emitted without parallax.

Figure 4 shows another exemplary measuring instrument 1 with a scanning absolute distance meter 2. For sake of clarity, the indication of the distance measurement beam path as shown in figure 3 has been omitted here.

In contrast or addition to the embodiment according to figure 3, the instrument 1 comprises a camera 29 with an optical sensor 26 and optics 27. The image sensor 26 can be realized by an imaging CMOS or CCD sensor or an analogue PSD. In this embodiment, beam deflection element 8 is partially transmissive e.g. by a spectral selective optical coating and an aperture or window at its back side. This allows that received ambient or natural light or specific illumination light I entering aperture 7 goes (without considerable attenuation) "behind" deflection element 8 and is directed by optics 27 to sensor 26 which is used as a camera chip. As an alternative to the illustration, a beam splitter is used for reflecting/light splitting centrally after deflector 8 or a non-coaxial camera can be implemented.

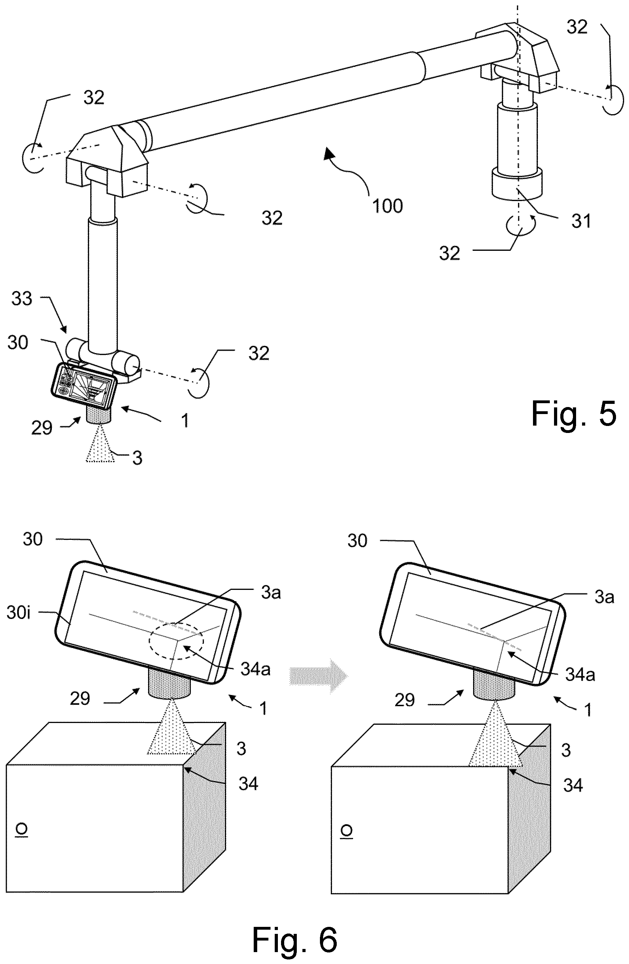

Thus, instrument 1 can act as for instance as a camera, providing an on-axis view of the instrument's sight, e.g. as a live image, to a user by a display unit of instrument 1 or any device with a display connected to instrument 1 (cf. also Fig. 5). As an addition, the instrument 1 comprises an autofocus and/or zooming optical group for adapting focus of the instrument 1 resp. camera 29. As another option, the instrument can comprise a separate overview-camera e.g. at the front besides aperture 7 preferably with its optical axis parallelly displaced to the measurement axis T.

Light reflected by an object's surface and imaged by image sensor 26 can also be used for obtaining an image for texturing of a generated point cloud or for analysing the object surface, for example determining a material property or classifying the surface according to stored surface classes. Thereby, specific illumination light might be used, e.g. polarized light.

Specific illumination light is -as depicted- for example provided in that the instrument 1 comprises illumination light sources 28 stiffly fixed at its front, for example two or more lasers, VCSELs, or LEDs surrounding the aperture 7 such that their common center or center of gravity is in middle of aperture 7 resp. on the optical axis. Light sources 28 provide illumination light I of the field of view of the camera. A PSD or CMOS-sensor 26 can be used to determine a deviation in the impingement point of the sensed light I from a servo control zero point, and the deviation can be taken as a basis for readjusting the emitting direction T of the distance measurement beam to the target. As an option, e.g. camera 29 can be used to precisely determine a direction of the measurement beam, whereby an offset can be compensated based on the known distance. Therewith, even a position encoder is not imperative.

As an option, a position sensitive optical sensor 26 can also be used to calibrate the distance meter 2, for example in that deflection element 8 is positioned such that it is aiming "backwards" (180° rotation compared to the posture depicted in the figure). Hence, the measurement beam path is going along not in direction to aperture 7 but in direction to sensor 26. The measurement beam spot's position on the sensor 26 is measured at different directions by moving the scanning mirror 8 to different vertical angles. Then a set of data is collected where the calibration parameters of the distance meter laser beam direction to the axis system of the instrument 1 can be deduced. Most relevant parameters comprise angle correction values are for example the horizontal and vertical laser beam angles before the mirror 8, the angle deviations of the fast rotating axis r and the discrepancy of the tilted mirror 8 from 45°. A prerequisite is the precise calibration of the camera 29 comprising the sensor 26 together with its complete imaging optics 27. For calibrating the targeting axis T, it is also necessary that the beam wavelength is within the sensitivity range of the sensor 26, e.g. shorter than 1100nm, for example a wavelength of 660nm if a CMOS-camera chip is used for sensor 26. In addition, a targetline-calibration can be done at different focus positions meaning different target distances.

In the exemplary embodiment, the measuring instrument 1 comprises an infrared sensor 35, too. The IR-sensor 35 enables to determine a temperature of the measured object surface. In a further development, the thermal emissivity of the object surface is determined, e.g. by image data provided by image sensor 26 and/or by determining a reflectivity using an intensity value of the received measurement beam. This emissivity value is then evaluated together with the measurement data of the IR-sensor 35 to determine the object surface's temperature.

As still another further development, the user selects one or more classes of predefined object classes and the temperature measurement is based on this selection, too. That is for example, the number of possible surface types the present surface might belong to is limited by user input which further improves the temperature determination.

By measuring non-cooperative targets, well-known effects, so called speckles, emerge that cause a deterioration of measurement accuracy. They appear as stochastic measurement fluctuations that are given by the depth variations within the measurement area, i.e. due to target roughness and target tilt with respect to the measurement beam. These effects are due to randomization of the interferometric phase caused by speckles that result from the coherency of the laser-light, which causes a measurement error. As a countermeasure, the device 1 comprises in the example an optical element 36, e.g. a diffractive optical element, for instance in form of an optical diffuser, a hybrid lens or a hologram, in the emitting beam path for homogenization of the measurement beam, e.g. homogenization of a light intensity unevenness and/or phase unevenness. As another option, speckles effects on the distance measurement are reduced or avoided on the receiving/detection side by speckle mitigation, e.g. in that phase decorrelation errors are compensated for by pointing angle corrections based on measurements of the speckle field and/or for example using a plurality of detectors or moving a detector relative to the speckle field.

For example by a cyclic or periodic movement of the optical element 36, e.g. a vibration or a rotation in the transmission channel perpendicularly to a propagation axis of the measurement beam using corresponding actuators perpendicular to the beam path or to the propagation axis of the measurement beam, a blurring of speckle effects is effected. A movement such as vibration, e.g. with an eccentricity, can be quite low in terms of the movement amplitude herefor, but is effected with a great frequency, in particular with an amplitude, which sufficient for mixing the measurement beam or blurring the speckles and a frequency which is sufficiently fast to obtain an average of speckles during a measurement or over a plurality of measurements that are averaged for obtaining a distance measurement value for one object point. Such an averaging over a plurality of measurements to form one final measurement value can also be applied as such as an algorithmic speckle countermeasure.

Figure 5 illustrates another example of a scanning measurement system 100. Such a measuring system 100 according to the invention can comprise a CMM or a UGV or UAV, yet in the example illustrated in the figure, the exemplary system 100 is embodied as an Articulated Arm Coordinate Measurement Machine (AACMM) with a scanning head as inventive measuring instrument 1.

The articulated arm 100 comprises a base 31, which is stationed during measurement. The whole AACMM 100 can either be embodied as being portable between the measurements or embodied to be permanently installed to a certain location, such as a measurement table, factory hall or the like. The movable end 33 of the articulated arm 100, which is opposed to the stationed end 31 of the AACMM 100, is manually movable. Movability is provided by multiple articulations 32 along the arm, each providing at least one degree of freedom. The number and type of those articulations 32 may vary from embodiment to embodiment. The articulations 32 of the here shown example has five pivot joints and three linear guided pullouts. The movable end 33 is manually movable by a here not shown human operator, for example by means of some kind of handle, grip or another hand grip element. The probe head 1 is permanently or detachably attached to the movable end 33.

The probe head 1 is used for contactless measurement with scanning beam 3. For measuring, the operator approaches a desired measurement point or area by probe head 1, wherein the there is no physical contact of the probe and the object to be measured. The instrument 1 is capable of quantizing the proximity of the object by its absolute distance meter, which information is combined with the arms pose determined by the position sensors at the articulations 32 to result in a coordinate measurement value.

In the example, the measuring instrument 1 comprises a camera 29 (as also described above) and the movable end 33 of the arm 100 comprises a display unit 30 for providing a camera's view to the operator of the arm 100.

The camera is for example used for overlaying a CAD of the workpiece to be scanned with the actual image from the camera to guide the operator during a measuring procedure and/or to show deviations of geometrical features of the object compared to their desired values in real-time. For example, the display unit 30 mounted at the movable end 33 of the arm 100 with the camera being orientated in the direction of the object can picture or film the object, in particular wherein the cameras field of view is covering the area in which the probe 1 is capable of gathering measurements. The display 30 can then present augmented reality content to the user, comprising at least part of the camera image overlaid by graphical information regarding the measurement task, for example, the measurement results can be shown in direct vicinity of the point or area that is measured by the probe head 1. Thereby, the operator can observe his measurements through the augmented reality image presented by the display unit. For example, also a desired next measurement point or the direction to approach it and/or a latest measurement result can immediately be presented to the operator.

The operator can for instance be informed about the measurement results by the indicative graphical elements. For example, the display unit 30 can provide information about how to measure a desired geometrical feature of the object - for example as a step by step or point by point sequence of areas, points or lines to be measured by the probe head 1. After or even while the operator executes this sequence, the display unit 30 can provide information with respect to the measurement results, for example an indication of dimensional values, dimensioning lines, graphical and/or alphanumerical indications shown at positions of the artificial view, which correspond to those on the real object. This makes it much easier for the operator to understand his measurements, in particular as the artificial view of the display unit 30 located at the movable end 33 of the arm is always in view of the operator during the measurement and he does not need to look up from the probe head 1 to check whether his sequence or measurement results are correct or to see what comes next. The operator can pay his full attention to the probe head 1 he guides with his hand.

A camera view on display 30 also allows additional functions such a zooming in to exactly approach the desired measurement point. The zooming can be controlled manually and/or can be a dynamic zooming, which can e.g. be dependent on the desired feature to be measured and/or the actual divergence from the probe head 1 to the desired measurement point or area. As another option in case of a scanning beam with a wavelength in the invisible range, an artificial view of the targeting axis or point of incidence of the scanning beam can be displayed on display 30 based on the camera image and using information about the targeting axis provided by the positions of the articulations 32 and the beam deflection element of the head 1.

A presented artificial view can also be a combination of a camera picture and rendered graphical data computed according to a digital 2D- and/or 3D-model of the measurement object, preferably wherein the view of the camera and/or the rendered data are adopted in such a way that their views are matching. Such a matching can be determined according to digital techniques of image processing (e.g. by edge extraction, ...) applied to the picture and/or according to the fact that the point of view of the camera can be determined according to the pose of the arm. For example, the display unit 30 can present a part of the picture from the camera, augmented by the outlines of the object rendered from CAD data in an overlaid wireframe representation, which is further overlaid by the indicative graphical elements, e.g. comprising dimensioning lines from edge to edge and an indication of one or more points or areas to approach with the probe head 1 in order to measure this geometrical feature. Such a feature detection by image processing can also be used for automatic beam alignment as described in the following with respect to figure 6.

Figure 6 shows the measuring instrument 1, embodied e.g. as the probe head of an articulated arm, having a camera 29 and a display 30. In an image 30i captured with the camera 29, part of the object O to be measured is displayed, in the example with an overlay 3a of the current targeting line provided by beam 3. In the example, a specific feature 34, e.g. the edge of object O is to be scanned using the absolute scanning distance meter.

By image processing of the image 30i, this feature 34 is detected, indicated in the figure by the marking 34a. In the initial positioning of the instrument 1, the targeting axis is not aligned to this feature 34 as indicated on the left side of the figure. Now in this embodiment, the evaluation unit is configured to automatically align the measurement beam 3 to the identified feature 34 as indicated on the right side of figure 6. That is, the beam steering element is automatically activated in such a way that the measurement beam 3 is directed to the edge 34 of object O and scanning it e.g. linewise as depicted. Hence, a user must only roughly target an object O resp. a feature 34 whilst the instrument 1 automatically fine aligns the beam 3 for measurement based on the camera image 30i and the known position and orientation of the instrument 1 resp. targeting axis. In addition, in embodiments with an automatic focus, beam 3 can be selectively be focused on a selected feature 34. Then, a selected feature 34 is measured with optimal beam focus whereas surrounding parts of an object O can be measured with relaxed demands on beam focus. Additionally, scanning can be optimized with regard to (reduced or acceptable) focussing speeds.

Thereby, of course, the image 30i has not necessarily be displayed to the user. However in case the image 30i is displayed, an object feature 34 to be automatically targeted can also be selected or marked by the user in the image 30i instead or in addition to an automatic feature selection. Both approaches can also be combined e.g. in that the user initially selects one feature, e.g. edge 34, and the control unit automatically recognizes similar features to be measured, e.g. the other edges of object O.

Although the invention is illustrated above, partly with reference to some preferred embodiments, it must be understood that numerous modifications and combinations of different features of the embodiments can be made. All of these modifications lie within the scope of the appended claims.

## Claims

1. Measuring instrument for coordinative measuring of object surface points of an object, the measuring instrument being embodied as a measuring head of a coordinate measuring machine, of an unmanned ground or aerial vehicle or of an articulated arm or embodied as a handheld measuring probe of a measuring system having a surveying station, in particular a laser tracker, or embodied as a 6-DoF-handheld measuring instrument with an IMU, whereby the measuring instrument comprises a scanning absolute distance meter with
- a light source,
- a transmission channel for emitting light from the light source as a measurement beam along a targeting axis towards the object,
- a scanning unit, in particular a beam deflection unit, for scanning steering of the targeting axis,
- a receiver channel for receiving at least part of the measurement beam reflected from the object surface,
- an opto-electronic detector for detection of the received measurement beam and outputting an according detection signal, and
- an evaluation unit for determination of a coordinate of a surface point based on the actual targeting axis and on an absolute distance derived from the detector's detection signal.

2. Measuring instrument according to claim 1
**characterised in that**
the beam deflection unit comprises position measuring means for measuring of the actual targeting axis.

3. Measuring instrument according to claim 1 or 2
**characterised in that**
the beam deflection unit is designed for variable scanning deflection of the targeting axis, in particular according to a 1D/line-scanning mode and a 2D-scanning mode.

4. Measuring instrument according to according to any one of the preceding claims
**characterised in that**
the beam deflection unit comprises a polygonal wheel, rotating mirror, MEMS-mirror, galvo-mirror, acousto-optic modulator, electro-optic modulator, liquid lens, liquid-filled variable wedge, KTN crystal, phased array and/or Risley-prism, in particular whereby in case of a MEMS-mirror, the MEMS-mirror is designed for beam deflection by oscillation with resonance frequency.

5. Measuring instrument according to any one of the preceding claims
**characterised in that**
the transmission channel comprises a focusing optics for, in particular adaptive, focusing the measurement beam on the object surface.

6. Measuring instrument according to any one of the preceding claims
**characterised in that**
the absolute distance meter is designed for determining a distance based on the principle of time-of-flight, frequency comb principle, frequency modulated continuous wave principle, Fizeau principle and/or phase difference measurement principle.

7. Measuring instrument according to any one of the preceding claims
**characterised in that**
the measuring instrument is designed for point measurement rates of above 100k points/sec.

8. Measuring instrument according to any one of the preceding claims
**characterised in that**
the measuring instrument comprises a targeting axis stabilization.

9. Measuring instrument according to any one of the preceding claims
**characterised in that**
the measuring instrument comprises a feedback loop for control of the intensity of the emitted measurement beam based on the detection signal.

10. Measuring instrument according to any one of the preceding claims
**characterised in that**
the measuring instrument comprises means for emitting an indicator light, in particular as an indicator beam coaxially to the measurement beam.

11. Measuring instrument according to any one of the preceding claims
**characterised in that**
the measuring instrument comprises means for speckle reduction.

12. Measuring instrument according to any one of the preceding claims
**characterised in that**
the evaluation unit is designed to determine an intensity value of the detected measurement beam, in particular whereby the evaluation unit is designed to generate a colorized point cloud based on the determined coordinates and the intensity values and/or to derive a property of the measured surface from the intensity value.

13. Measuring instrument according to any one of the preceding claims
**characterised in that**
the measuring instrument comprises a sensor for determination of a position and/or orientation of the measuring instrument, in particular an Inertial Measurement Unit.

14. Measuring instrument according to any one of the preceding claims
**characterised in that**
the measuring instrument comprises a camera for imaging at least part of the object surface, in particular whereby
- the camera is arranged in a defined and known spatial relationship to the targeting axis, in particular is an on-axis camera, and/or to a reference point of the absolute distance meter and/or
- the beam deflection unit is controllable in such a way that the targeting axis is automatically aligneable to a feature of the object surface detected by image evaluation of an image captured with the camera and/or
- the evaluation unit is designed to determine a thermal emissivity of the object surface based on a camera image and/or measured intensity value of the reflected measurement beam and/or
- the evaluation unit is designed to provide an augmented image of the object with a graphical overlay of nominal object data and/or of a feature to be measured.

15. Measuring instrument according to any one of the preceding claims
**characterised in that**
the measuring instrument comprises a sensor for measuring a temperature of the object surface, in particular an infrared sensor.
